(19) Europäisches Patentamt

European Patent Office

Office européen des brevets

(11) Veröffentlichungsnummer : **0 352 444 B1**

(12) **EUROPÄISCHE PATENTSCHRIFT**

(45) Veröffentlichungstag der Patentschrift :
22.01.92 Patentblatt 92/04

(51) Int. Cl.⁵ : **F16K 31/02**

(21) Anmeldenummer : **89110006.7**

(22) Anmeldetag : **02.06.89**

(54) Elektromagnetisch betätigbares Ventil und Verfahren zur Herstellung.

(30) Priorität : **23.07.88 DE 3825134**

(43) Veröffentlichungstag der Anmeldung :
**31.01.90 Patentblatt 90/05**

(45) Bekanntmachung des Hinweises auf die
Patenterteilung :
**22.01.92 Patentblatt 92/04**

(84) Benannte Vertragsstaaten :
**DE ES FR GB IT**

(56) Entgegenhaltungen :
**DE-A- 1 550 112**
**US-A- 4 453 700**
**US-A- 4 610 080**

(73) Patentinhaber : **ROBERT BOSCH GmbH**
**Postfach 10 60 50**
**W-7000 Stuttgart 10 (DE)**

(72) Erfinder : **Babitzka, Rudolf, Dipl.-Ing. (FH)**
**Birkenweg 11**
**W-7141 Kirchberg-Neuhof (DE)**

## Beschreibung

### Stand der Technik

Die Erfindung geht aus von einem elektromagnetisch betätigbaren Ventil bzw. einem Verfahren zur Herstellung nach der Gattung des Anspruches 1 bzw. des Anspruches 8. Es ist bereits ein elektromagnetisch betätigbares Ventil bekannt (US-PS 4610080), bei dem die Magnetspule zur Leitung der Magnetfeldlinien von einem metallenen Ventilgehäuse umgeben ist, das aus ferromagnetischem Material besteht. Hierdurch ergibt sich nicht nur ein hoher Arbeitsaufwand zur Herstellung des metallenen Ventilgehäuses, sondern auch ein großer Durchmesser und ein unerwünscht hohes Gewicht des Ventiles, da die Wandstärke des Ventilgehäuses aus statischen Gründen dicker gefertigt wird, als zur Leitung der Magnetfeldlinien erforderlich ist. Weiterhin ist bei dem bekannten Ventil zwischen dem Ventilgehäuse und dem Ventilsitzkörper ein aus Kunststoff gefertigtes Zwischenteil angeordnet, durch welches die Gefahr besteht, daß sich aufgrund von Wärmedehnungen oder Quellungen des Kunststoffes dieses Zwischenteil derart seine Lage verändert, daß die Ventilnadel verklemmt oder sich der zwischen dem Anker und dem Kern vorgesehene Hub der Ventilnadel in unerwünschter Weise ändert.

### Vorteile der Erfindung

Das erfindungsgemäße Ventil bzw. Verfahren zur Herstellung des Ventiles mit den kennzeichnenden Merkmalen des Anspruches 1 bzw. des Anspruches 8 hat demgegenüber den Vorteil, daß sich die Außenkontur des Ventiles auf einfache Art und Weise leicht den Erfordernissen am Einsatzort des Ventiles anpassen läßt und daß sich das Ventil einfach und kostengünstig und mit kleineren Umfangsabmessungen fertigen läßt, wobei die Anforderungen an die Betriebssicherheit des Ventiles gewährleistet werden. Die in der Kunststoffummantelung eingelagerten ferromagnetischen Füllstoffe führen auch zu einer ausreichenden Wärmeableitung von innen nach außen, so daß als Material für die Wicklung der Magnetspule auch Kupfer verwendet werden kann, wodurch sich gegenüber einer Wicklung aus Messing geringere Abmessungen ergeben. Die Wärmeableitung dient zur Vermeidung einer Kraftstoffausdampfung.

Durch die in den Unteransprüchen aufgeführten Maßnahmen sind vorteilhafte Weiterbildungen und Verbesserungen des im Anspruch 1 angegebenen Ventiles möglich.

Vorteilhaft ist es, daß zwischen einem dem Anker zugewandten Kernende des Anschlußstutzens und dem Ventilsitzkörper ein rohrförmiges metallenes Zwischenteil angeordnet ist, daß zur Führung des Ankers dient.

Zusätzlich vorteilhaft ist es, das Zwischenteil aus nichtmagnetischem Material zu fertigen und mit einer Führungsbohrung zur Führung des Ankers zu versehen sowie in diesem den Anker führenden Bereich wenigstens zwei Ringnuten mit axialem Abstand zueinander vorgesehen. Hierdurch läßt sich eine sehr schlanke und starre Verbindung zwischen dem Anschlußstutzen und dem Ventilsitzkörper herstellen. Außerdem ergeben sich schmale Luftspalte für den Magnetkreis.

Vorteilhaft ist es ebenfalls, den Anker zum Ventilschließkörper hin rohrförmig und möglichst dünnwandig auszugestalten, so daß sich möglichst geringe durch das Elektromagnetfeld zu bewegende Massen ergeben.

Durch die Erregung der Magnetspule während wenigstens der Erstarrungsphase der Kunststoffummantelung erfolgt in vorteilhafter Weise eine Ausrichtung der Füllstoffe mit ferromagnetischen Eigenschaften.

### Zeichnung

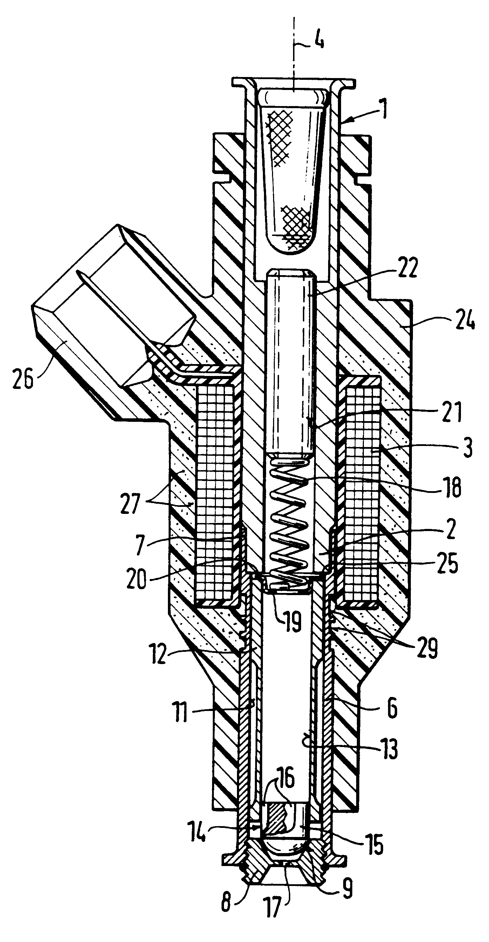

Ein Ausführungsbeispiel der Erfindung ist in der Zeichnung vereinfacht dargestellt und in der nachfolgenden Beschreibung näher erläutert.

### Beschreibung des Ausführungsbeispieles

Das in der Zeichnung beispielsweise dargestellte elektromagnetisch betätigbare Ventil in Form eines Einspritzventiles für Kraftstoff als Aggregat einer Kraftstoffeinspritzanlage einer gemischverdichtenden fremdgezündeten Brennkraftmaschine hat einen rohrförmigen metallenen Anschlußstutzen 1 aus ferromagnetischem Material, auf dessen unterem Kernende 2 eine Magnetspule 3 angeordnet ist. Der Anschlußstutzen 1 dient somit zugleich als Kern. Anschließend an das Kernende 2 des Anschlußstutzens 1 ist konzentrisch zur Ventillängsachse 4 dicht mit dem Anschlußstutzen 1 ein Zwischenteil 6 verbunden, beispielsweise durch Verlöten oder Verschweißen. Das Zwischenteil 6 ist aus nichtmagnetischem Metall gefertigt und umgreift beispielsweise mit einem Bund 7 das Kernende 2. Dem Anschlußstutzen 1 abgewandt ist mit dem Zwischenteil 6 ein metallener Ventilsitzkörper 8 verbunden, der dem Kernende 2 des Anschlußstutzens 1 zugewandt einen festen Ventilsitz 9 aufweist. Die Verbindung zwischen dem Zwischenteil 6 und dem Ventilsitzkörper 8 ist ebenfalls dicht ausgeführt, sie kann beispielsweise durch eine Verschraubung, Verschweißung oder Verlötung erfolgen. Die Aneinanderreihung von Anschlußstutzen 1, Zwischenteil 6 und Ventilsitzkörper 8 stellt eine starre metallene Einheit dar. Das Zwischenteil 6 ist rohrförmig ausgebildet und besitzt eine koaxiale Führungsbohrung 11, in die sich ein Anker 12 erstreckt, der durch die Führungsbohrung während seiner Verschiebebewegung geführt wird und rohrförmig ausgebildet ist. In einer Innenbohrung 13 des Ankers 12 ist an seinem dem Ventilsitz 9 zugewandten Ende ein Ventilschließkörper 14 angeordnet und mit diesem verbunden, der beispielsweise die Form eines Zylinderabschnittes 15 mit einem halbkugelförmigen Ende oder eine andere Form haben kann. Am Umfang des Zylinderabschnittes 15 des Ventilschließkörpers 14 sind nach außen führende Abflachungen 16 vorgesehen, über die vom Anschlußstutzen 1 her zuströmender Kraftstoff den Anker 12 innen durchströmend aus der Innenbohrung 13 zum Ventilsitz 9 gelangen kann, stromabwärts dessen im Ventilsitzkörper 8 wenigstens eine Abspritzöffnung 17 ausgebildet ist.

Dem Ventilschließkörper 14 abgewandt ragt in die Innenbohrung 13 des Ankers 12 eine Rückstellfeder 18, die sich beispielsweise mit ihrem einen Ende an einem topfförmigen Federteller 19 in der Innenbohrung 13 abstützt. Der Federteller 19 liegt mit einem Kragen 20 an einer dem Kernende 2 zugewandten Ankerstirnfläche 25 an und bildet im erregten Zustand der Magnetspule 3 einen Restluftspalt zwischen Kernende 2 und Ankerstirnfläche 25. Das andere Ende der Rückstellfeder 18 ragt in eine Strömungsbohrung 21 des Anschlußstutzens 1 und liegt dort an einer rohrförmigen Verstellbuchse 22 an, die zur Einstellung der Federspannung dient. Mindestens ein Teil des Anschlußstutzens 1 und die Magnetspule 3 in ihrer gesamten axialen Länge sind durch eine Kunststoffummantelung 24 umschlossen, die auch wenigstens noch einen Teil des Zwischenteils 6 umschließt. Die Kunststoffummantelung 24 kann durch Ausgießen oder Umspritzen mit Kunststoff erzielt werden. An der Kunststoffummantelung 24 ist zugleich ein elektrischer Anschlußstecker 26 angeformt, über den die elektrische Kontaktierung der Magnetspule 3 und damit deren Erregung erfolgt. Wenigstens in dem die Magnetspule 3 umgebenden Teil der Kunststoffummantelung 24 sind die Magnetfeldlinien leitende Füllstoffe 27 vorgesehen, die aus ferromagnetischem Material bestehen und in der Zeichnung als Punkte dargestellt sind. Als Füllstoffe 27 finden beispielsweise feinkörnig zerkleinerte Teile von Metallen mit weichmagnetischen Eigenschaften Verwendung. Zur besseren Ausrichtung der Füllstoffe 27 ist es zweckmäßig, während des Spritz- bzw. Ausgießvorganges der Kunststoffummantelung 24 und/oder deren Erstarrungsphase die Magnetspule 3 zu erregen.

Das Zwischenteil 6 hat an seinem Umfang in dem den Anker führenden Bereich wenigstens zwei Ringnuten 29, die einen axialen Abstand zueinander haben und trotz der Bildung eines möglichst geringen Luftspaltes für den Magnetkreis eine ausreichende Steifigkeit des Zwischenteiles 6 gewährleisten.

Die beschriebene Kunststoffummantelung erlaubt eine kompakte, schlank bauende Ventilkonstruktion, die eine einfache und kostengünstige Fertigung ermöglicht.

**Patentansprüche**

1. Elektromagnetisch betätigbares Ventil, insbesondere Einspritzventil für Kraftstoffeinspritzanlagen von Brennkraftmaschinen, mit einem sich entlang einer Ventillängsachse (4) erstreckenden ferromagnetischen, metallenen und als Kern dienenden Anschlußstutzen (1), auf dem eine Magnetspule (3) angeordnet ist, mit einem Anker (12), durch den ein mit einem festen Ventilsitz zusammenwirkender Ventilschließkörper (14) betätigbar ist, mit einem den festen Ventilsitz (9) aufweisenden metallenen Ventilsitzkörper (8) und einer einen Teil des Anschlußstutzens umgebenden Kunststoffummantelung (24), dadurch gekennzeichnet, daß die Kunststoffummantelung (24) ebenfalls die Magnetspule (3) umgibt und mindestens in dem die Magnetspule (3) umgebenden Teil der Kunststoffummantelung (24) Magnetfeldlinien leitende Füllstoffe (27) mit ferromagnetischen Eigenschaften eingeschlossen sind.

2. Ventil nach Anspruch 1, dadurch gekennzeichnet, daß mit einem dem Anker (12) zugewandten Kernende (2) des Anschlußstutzens (1) ein sich in Richtung zum Ventilsitzkörper (8) hin erstreckendes rohrförmiges metallenes Zwischenteil (6) verbunden ist.

3. Ventil nach Anspruch 2, dadurch gekennzeichnet, daß das Zwischenteil (6) aus nichtmagnetischem Material gefertigt ist und eine Führungsbohrung (11) zur Führung des Ankers (12) aufweist.

4. Ventil nach Anspruch 3, dadurch gekennzeichnet, daß das Zwischenteil (6) mit dem Ventilsitzkörper (8) verbunden ist.

5. Ventil nach Anspruch 4, dadurch gekennzeichnet, daß der Anker (12) rohrförmig ausgebildet und dem Ventilsitz (9) zugewandt mit dem Ventilschließkörper (14) verbunden ist.

6. Ventil nach Anspruch 5, dadurch gekennzeichnet, daß der Ventilschließkörper (14) einen Zylinderabschnitt (15) hat, der teilweise in eine Innenbohrung (13) des Ankers (12) ragt und sich in Richtung der Ventillängsachse (4) von der Innenbohrung (13) nach außen erstreckende Abflachungen (16) hat.

7. Ventil nach Anspruch 4, dadurch gekennzeichnet, das Zwischenteil (6) an seinem Umfang in dem den Anker (12) führenden Bereich wenigstens zwei Ringnuten (29) mit axialem Abstand zueinander hat.

8. Verfahren zur Herstellung eines elektromagnetisch betätigbaren Ventiles, auf dessen als Kern dienendem Anschlußstutzen (1) eine Magnetspule (3) angeordnet ist und durch dessen Anker (12) ein mit einem in einem Ventilsitzkörper (8) ausgebildeten festen Ventilsitz (9) zusammenwirkender Ventilschließkörper (14) betätigbar ist, insbesondere zur Herstellung eines Ventiles nach einem der Ansprüche 1 bis 7, dadurch gekennzeichnet, daß in einem ersten Verfahrensschritt der Anschlußstutzen (1) und die Magnetspule (3) mit einer Kunststoffummantelung (24) versehen werden, die mindestens in ihrem die Magnetspule (3) umgebenden Teil Füllstoffe (27) aus ferromagnetischem Material aufweist und in einem zweiten Verfahrensschritt mindestens während der Erstarrungsphase der Kunststoffummantelung (24) die Magnetspule (3) erregt wird.

## Claims

1. Electromagnetically operated valve, especially injection valve for fuel-injection systems of internal-combustion engines, with a ferromagnetic metal connection piece (1) which extends along a longitudinal axis (4) of the valve and serves as a core and on which a magnet coil (3) is arranged, with an armature (12) by which a valve-closing body (14) interacting with a fixed valve seat can be actuated, with a metal valve-seat body (8) having the fixed valve seat (9), and with a plastic casing (24) surrounding part of the connection piece, characterised in that the plastic casing (24) likewise surrounds the magnet coil (3), and fillers (27) conducting magnetic flux lines and having ferromagnetic properties are included at least in the part of the plastic casing (24) surrounding the magnet coil (3).

2. Valve according to Claim 1, characterised in that a tubular metal intermediate part (6) extending in the direction of the valve-meat body (8) is connected to a core end (2) of the connection piece (1) facing the armature (12).

3. Valve according to Claim 2, characterised in that the intermediate part (6) is produced from non-magnetic material and has a guide bore (11) guiding the armature (12).

4. Valve according to Claim 3, characterised in that the intermediate part (6) is connected to the valve-seat body (8).

5. Valve according to Claim 4, characterised in that the armature (12) is made tubular and, facing the valve seat (9), is connected to the valve-closing body (14).

6. Valve according to Claim 5, characterised in that the valve-closing body (14) has a cylinder portion (15) which partially projects into an inner bore (13) of the armature (12) and which possesses flattenings (16) extending outwards from the inner bore (13) in the direction of the longitudinal axis (4) of the valve.

7. Valve according to Claim 4, characterised in that the intermediate part (6) has at least two annular grooves (29) at an axial distance from one another on its circumference in the region guiding the armature (12).

8. Method for producing an electromagnetically operated valve, on the connection piece (1) of which, serving as a core, a magnet coil (3) is arranged and by the armature (12) of which a valve-closing body (14) interacting with a fixed valve seat (9) formed in a valve-seat body (8) can be actuated, especially for producing a valve according to one of Claims 1 to 7, characterised in that, in a first step of the method, the connection piece (1) and the magnet coil (3) are provided with a plastic casing (24) which has fillers (27) of ferromagnetic material at least in its part surrounding the magnet coil (3), and, in a second step of the method, the magnet coil (3) is energised at least during the solidification phase of the plastic casing (24).

## Revendications

1. Soupape électromagnétique, notamment injecteur pour des installations d'injection de carburant de moteurs à combustion interne, avec une tubulure de raccordement (1) en métal ferromagnétique s'étendant le long de l'axe longitudinal (4) de la soupape et jouant le rôle de noyau, sur laquelle est disposée une bobine magnétique (3), avec une armature (12) grâce à laquelle un corps de fermeture de soupape (14) coopérant avec un siège de soupape fixe, est susceptible d'être actionnée, avec un corps métallique (8) de siège de soupape comportant le siège de soupape fixe (9) et avec une enveloppe en matière plastique (24) entourant une partie de la tubulure de raccordement, soupape électromagnétique caractérisée en ce que l'enveloppe en matière plastique (24) entoure également la bobine magnétique (3) et en ce qu'au moins dans la partie de l'enveloppe en matière plastique (24) entourant la bobine magnétique (3), sont inclues des matières de remplissage (27), avec des propriétés ferromagnétiques, canalisant les lignes de force du champ magnétique.

2. Soupape selon la revendication 1, caractérisée en ce qu'une pièce intermédiaire métallique (6) de forme tubulaire s'étendant dans la direction du corps du siège de soupape (8) est reliée à une extrémité (2), jouant le rôle de noyau, de la tubulure de raccordement (1) en regard de l'armature (12).

3. Soupape selon la revendication 2, caractérisée en ce que la pièce intermédiaire (6) est fabriquée en matériau non magnétique et comporte un alésage de guidage (11) pour guider l'armature (12).

4. Soupape selon la revendication 3, caractérisée en ce que la pièce intermédiaire (6) est reliée au corps du siège de soupape (8).

5. Soupape selon la revendication 4, caractérisée en ce que l'armature (12) est de forme tubulaire et est reliée au corps de fermeture de la soupape (14) à son extrémité en regard du siège de soupape (9).

6. Soupape selon la revendication 5, caractérisée en ce que le corps de fermeture de la soupape (14) a un tronçon cylindrique (15) qui pénètre partiellement dans un perçage interne (13) de l'armature (12) et comporte des méplats (16) s'étendant en direction de l'axe longitudinal de la soupape (14) depuis le perçage interne (13) vers l'extérieur.

7. Soupape selon la revendication 4, caractérisée en ce que la pièce intermédiaire (6) comporte sur sa périphérie dans la zone guidant l'armature (12), au moins deux gorges annulaires (29) à une certaine distance axiale l'une de l'autre.

8. Procédé de fabrication d'une soupape électromagnétique, sur la tubulure de raccordement (1) de laquelle, jouant le rôle de noyau, est disposée une bobine magnétique (3) dont l'armature (12) est susceptible d'être actionnée, un corps de fermeture de soupape (14) coopérant avec un siège de soupape fixe (9) ménagé dans un corps de siège de soupape (8), procédé prévu notamment pour la fabrication d'une soupape selon une des revendications 1 à 7, caractérisé en ce que dans une première étape du procédé, la tubulure de raccordement (1) et la bobine magnétique (3) sont munies d'une enveloppe en matière plastique (24) qui au moins dans sa partie entourant la bobine magnétique (3) comporte des matières de remplissage (27) en un matériau ferromagnétique, tandis que dans une deuxième étape du procédé, la bobine magnétique (3) est excitée au moins pendant la phase de durcissement de l'enveloppe en matière plastique (24).